# EUROPEAN PATENT SPECIFICATION

(11) **EP 3 188 438 B1**
(45) Date of publication and mention of the grant of the patent: **05.09.2018**
(21) Application number: 16201837.8
(22) Date of filing: 02.12.2016
(51) Int. Cl.: H04L 29/06, H04L 29/08, G06F 21/33

(54) **MAINTAINING SESSION ACROSS PLURAL PROVIDING DEVICES**
AUFRECHTERHALTUNG EINER SITZUNG ÜBER MEHRERE BEREITSTELLUNGSVORRICHTUNGEN
MAINTIEN DE SESSION SUR L'ENSEMBLE DE DISPOSITIFS DE FOURNITURE MULTIPLES

(30) Priority: 31.12.2015 US 201514985597
(43) Date of publication of application: 05.07.2017
(73) Proprietor: Ricoh Company, Ltd., Tokyo 143-8555 (JP)
(72) Inventor: TANAKA, Shun, Tokyo, 143-8555 (JP)
(74) Representative: Schwabe - Sandmair - Marx

(56) References cited:
- WO-A1-2015/160389
- US-A1- 2006 291 481
- US-A1- 2011 125 909
- US-A1- 2015 007 269
- Jason Fitzpatrick: "How to Sync Your Media Across Your Entire House with XBMC", , 3 April 2012 (2012-04-03), XP055373260, Retrieved from the Internet: URL:https://www.howtogeek.com/75535/how-to -sync-your-media-across-your-entire-house- with-xbmc/ [retrieved on 2017-05-16]

## Description

This disclosure relates to systems, apparatuses, methodologies and other tools for maintaining a service session from a service providing device to another service providing device, and more specifically, such tools including provisions to resume a session started on the first device, on the other device.

### BACKGROUND

In the current information age, users increasingly use network-connected tools in their daily activities. Consequently, traffic on computer networks (e.g., the Internet) is an ongoing issue, and user expectations are also increasing.

For example, users often use a network-connected terminal (e.g., a mobile phone, a tablet, a notebook computer, a desktop computer, etc.) to communicate with a server to access information, data and other services provided by such server. Such communication is often session-based (such as via login by the user). Login may be considered by some users to be a burden, and even if login or session commencement is automatic (i.e. requiring little, if any, action by the user), the user may not have the patience to wait if user-requested information, data and other services are not received by the user promptly. Delay may be the result of network traffic, processing or other errors, high processing load on server side, and/or any of various other possible reasons. Such reasons may cause the session to stall and/or may lead the user to try to restart the session as a new session. In any event, the user may grow increasingly frustrated, especially if such circumstances persist.

There is a need for improved provisions for user sessions, so that the requested information, data and other services can be obtained by the user promptly, even if such service is not received from the server with which the session was initially commenced.

### SUMMARY

Various tools (for example, a system, an apparatus, application software, a method, etc.) can be provided to improve user sessions, such as to facilitate resumption of a session that was commenced by a client device with a session issuing server, on another service (or content) providing device, under any of various different circumstances. The present invention is defined in the independent claims. The dependent claims define embodiments of the present invention.

For example, the user of the client device may have impatiently terminated communication with the session issuing device and elected to reestablish the session with another service (or content) providing device, selected by the user or by the client device. In another example, load balancing provisions in the system (e.g., on a central device, on the session issuing device, or elsewhere in the system) automatically determines during the session that the session issuing device does not have the resources to complete the session, or at least cannot provide the requested information, data and/or other services efficiently or in a timely manner and therefore proceeds to assign the session to another service (or content) providing device. In another example, failover provisions in the system (e.g., on a central device, on the session issuing device, on the client device, or elsewhere in the system) automatically determines during the session that the session issuing device cannot complete the session, such as due to errors in the processing or communication, and therefore proceeds to assign the session to another service (or content) providing device.

In an exemplary embodiment, a device (referenced herein as a "central device") is assigned in a system to track devices and sessions in the system, and each of plural providing devices is assigned to provide services to client devices. When a client device communicates with a providing device to request access to a specified service, the providing device communicates the service request of the client device to the central device. The central device returns to the providing device (a) a service list specifying service providing devices available to provide the requested service (and may, from time to time, provide to each providing device an all service list specifying, for each service provided in the system, service providing devices available to provide such service) and (b) a service client mapping associating the client device with the service list. The providing device in turn creates, and registers in local cache, a session including a client identifier identifying the client device, issuer information identifying the first providing device as session issuer, a delegation list specifying the service providing devices available to provide the requested service, and a session time-to-live (TTL), and communicates the session to the client device. If circumstance necessitates continuing the session with another providing device, the client device communicates with such other providing device to request the other providing device to resume the session for the client device to obtain the requested service. In such case, the other providing device verifies the session and communicates with the session issuer to determine whether the session has been revoked. If the session has not been revoked and the other providing device can validate the session, the other providing device permits the session to resume with the other providing device providing the requested service associated with the session to the client device.

### BRIEF DESCRIPTION OF THE DRAWINGS

The aforementioned and other aspects, features and advantages can be more readily understood from the following detailed description with reference to the accompanying drawings wherein:
**Fig. 1** shows a block diagram of a system for a user session to proceed across multiple service (or content) providing devices, in accordance with an exemplary embodiment of this disclosure;
**Fig. 2** shows a block diagram of an exemplary configuration of a computing device, that can be configured by programming to operate as a central device or a service (or content) providing device, such as in the system shown in Fig. 1;
**Fig. 3** shows a block diagram of an exemplary configuration of a terminal that can operate as a client device, such as in the system shown in Fig. 1;
**Fig. 4A** shows a block diagram of a system for a user session to proceed across multiple service (or content) providing devices, in accordance with another exemplary embodiment;
**Fig. 4B** shows a block diagram of a system for a user session to proceed across multiple service (or content) providing devices, in accordance with another exemplary embodiment;
**Fig. 5** shows a schematic diagram of an example of communication flow, such as in any of the systems shown in Figs. 1, 4A and 4B;
**Fig. 6** shows a schematic diagram of another example of communication flow, such as in any of the systems shown in Figs. 1, 4A and 4B;
**Fig. 7** shows a schematic diagram of another example of communication flow, such as in any of the systems shown in Figs. 1, 4A and 4B;
**Fig. 8** shows a flow chart of a method that can be performed by a central device, such as in any of the systems shown in Figs. 1, 4A and 4B;
**Fig. 9** shows a flow chart of a method that can be performed by a providing device, such as in any of the systems shown in Figs. 1, 4A and 4B;
**Fig. 10** shows a flow chart of a method that can be performed by a client device, such as in any of the systems shown in Figs. 1, 4A and 4B;
**Fig. 11** shows a flow chart of a method that can be performed by a client device, such as in any of the systems shown in Figs. 1, 4A and 4B;
**Figs. 12A-12D** show respective views of a user interface that can be provided on a client device, such as in any of the systems shown in Figs. 1, 4A and 4B;
**Fig. 13** show a flow chart of a method that can be performed by a client device, such as in any of the systems shown in Figs. 1, 4A and 4B;
**Fig. 14** shows a flow chart of a method that can be performed by a providing device, such as in any of the systems shown in Figs. 1, 4A and 4B;
**Fig. 15** shows a service list, in the form of a table, as an example; and
**Fig. 16** shows an example of a table of session information.

### DETAILED DESCRIPTION

In describing preferred embodiments illustrated in the drawings, specific terminology is employed herein for the sake of clarity. However, this disclosure is not intended to be limited to the specific terminology so selected and it is to be understood that each specific element includes all technical equivalents that operate in a similar manner. In addition, a detailed description of known functions and configurations is omitted from this specification when it may obscure the inventive aspects described herein.

Various tools to facilitate document processing, management and organization are discussed herein, with reference to examples in which a software application has a document management function and/or a document editor function. It should be appreciated by those skilled in the art that any one or more of such tools may be embedded in the application and/or in any of various other ways, and thus while various examples are discussed herein, the inventive aspects of this disclosure are not limited to such examples described herein.

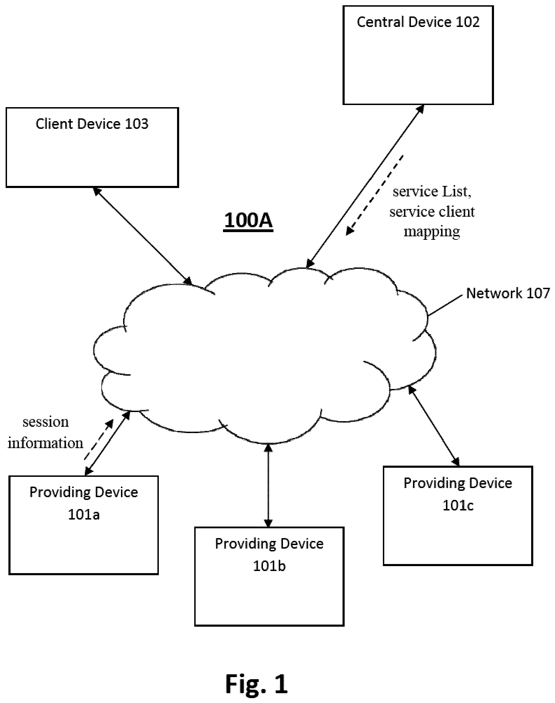

Referring now to the drawings, wherein like reference numerals designate identical or corresponding parts throughout the several views, **Fig. 1** shows schematically a system 100A, according to an exemplary embodiment, including providing devices 101a-101c, central device 102 and a client device 103, all of which are interconnected by a network 107.

The providing devices 101a-101c provide one or more services (e.g., document creation, mathematical simulation, electronic job application, online shopping, news providing service, etc.) that may be accessible by a client device 103. The services provided by each of the providing devices 101a-101c may overlap with each other. For example, the providing device 101a and the providing device 101c may both offer a "document creation" service. Likewise, it is also possible that the one of the providing devices 101a-101c may provide a service that is not supported by another of the providing device 101a-101c. For example, the providing device 101c may offer a "mathematical simulation" service that is not supported by either the providing device 101a or the providing device 101b.

When one (i.e. particular) of the providing devices 101a-101c receives a request from the client device 103 to access a specified service, the particular providing device forwards the request to the central device 102. Afterwards, the particular providing device receives (a) a service list that includes plural providing devices connected to the network that provide the same specified service that was requested by the client device 103 and (b) a service client mapping that associates the client device 103 with the service list. Next, after receiving the service list and the service client mapping, the particular providing device creates and stores (in a local cache) session information which may comprise (i) a session that includes a client identifier to identify the client device (e.g., 103) that is associated with the session, (ii) issuer information to establish that the particular providing device is the providing device that created the session, and (iii) a session time-to-live (TTL) which may be a predetermined number that limits the timespan (or life) of the session. After creating and storing the session information, the particular providing device may send the session, the service list and the service client mapping to the client device 103.

In an exemplary embodiment, the entire session for the client device 103 may not always be at the same providing device. In other words, the session may be transferred to another providing device even though the session has not expired (i.e. terminated) yet. This may occur after client device 103 receives the service list and service client mapping. After the client device 103 commences, for an indeterminate period of time, to access the service from a first providing device (e.g., 101b), the client device 103 determines from communicating with the first providing device that (i) the connection between the client device 103 and the first providing device is slow, (ii) the first providing device is processing too many services for other client devices at the moment, or (iii) the processing speed of the first providing device is too slow.

Thus, the client device 103 may search in the service list provided by central device 102 via the first providing device, to determine a second providing device that provides the same service. After identifying the second providing device (e.g., 101a), the client device 103 communicates with the second providing device to request that the session for the service be resumed. The second providing device verifies the session by communicating with the session issuer (in this case, the first providing device) to establish whether the session has been expired (or revoked). If the first providing device informs the second providing device that the session has not expired, the second providing device validates the session and proceeds to resume where the session left off previously at the first providing device. Otherwise, in the case that the first providing device informs the second providing that the session has been revoked, the second providing device rejects the request by the client device 103 to resume the session.

In another exemplary embodiment, while the client device 103 is accessing service from the first providing device, (e.g., 101a), there may be an error in the first providing device that prevents the first providing device from providing service to the client device 103. For example, (i) the client device 103 may be unable to communicate with the first providing device or (ii) the first providing device may have a software/hardware error that affects only the service providing portion. Thus, the client device 103 may search in the service list provided by central device 102 via the first providing device, to determine a second providing device that provides the same service. After identifying the second providing device (e.g., 101c), the client device 103 communicates with the second providing device to request that the session for the service be resumed.

Like previously, the second providing device can perform validation of the session by communicating with the session issuer (i.e. first providing device). However, it may be that the first providing device is currently broken. Thus, the second providing device has the alternative of validating the session by communicating with the central device 102 instead. In the case that the central device informs the second providing device that the session has not expired, the second providing device validates the session and proceeds to resume where the session left off previously at the central device 102. Otherwise, in the case that the central device 102 informs the second providing that the session has been revoked, the second providing device rejects the request by the client device 103 to resume the session.

The central device 102 monitors devices connected to the network 107 by, for example, communicating with and obtaining information regarding each of the devices. Such information may include one or more services (e.g., document creation, mathematical simulation, electronic job application, online shopping, news providing service, etc.) provided by each of the providing devices 101a-101c. After obtaining service information from the providing device 101a-101c, the central device 102 stores the service information in, for example, a database that is internal to or connected to the central device 102.

Whenever the client device 103 attempts to access one of the providing devices 101a-101c by sending a service request, a particular providing device (e.g., 101b) being accessed forwards the service request to the central device 102. The central device 102 determines, from the service request, the type of service being requested by the client device 103 and accesses the previously obtained service information to create a service list that includes plural providing devices that can perform the same service requested by the client device 103. The central device 102 also creates and stores a service client mapping which associates the client device 103 with the service list. Next, the central device 102 sends the service list and the service client mapping to the particular providing device (e.g., 101b) which originally forwarded the service request from the client device 103. After receiving the service list and the service client mapping from the central device 102, the particular providing device, as stated previously creates and stores (in a local cache) session information. In an exemplary embodiment, the particular providing device may also send the session information to be stored on the central device 102.

For example, the providing device 103a may offer "Service A", "Service B" and "Service C", the providing device 103b may offer "Service B" and "Service F", and the providing device 103c may only offer "Service E". When the client device 103 requests to access "Service B" from the providing device 103b, the providing device 103b forwards the request to the central device 102 which determines that providing device 103a can also provide "Service B". Thus, the central device 102 creates a service list that includes the providing device 103a and the providing device 103b. The central device 102 also creates a service client mapping that associates the client device 103 with the service list that includes the providing device 103a and the providing device 103b.

Any and each of the "client device" and "providing device" can be configured via one or more programs to operate as a server. On the other hand, such device is not required to operate as a server but instead may communicate with other devices on a peer basis, or in another fashion.

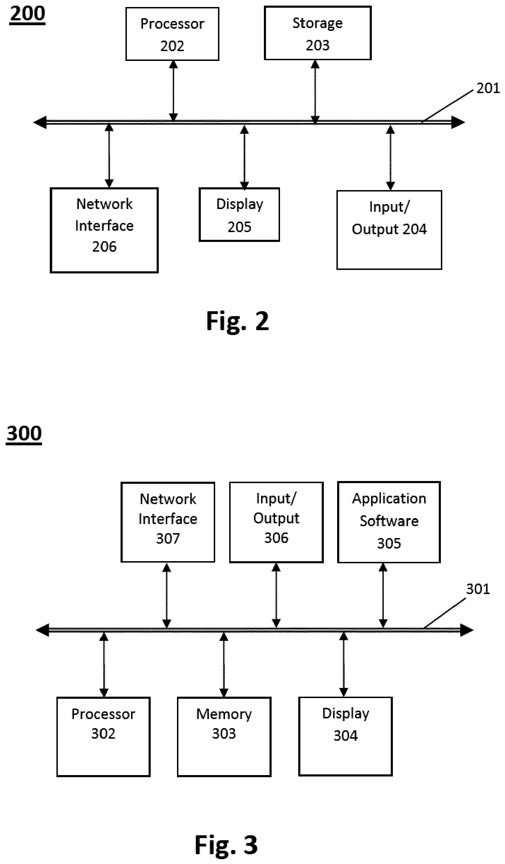

The client device 103 can be any computing device, including but not limited to a personal, notebook or workstation computer, a kiosk, a PDA (personal digital assistant), a mobile phone or handset, another information terminal, etc., that can communicate with other devices through the network 107. The client device 103 is further described *infra* with reference to **Fig. 3****.**

The client device 103 may include a web browser (e.g., Internet Explorer, Google Chrome, Safari, FireFox, etc.) or an application installed thereon that permits access to one or more of the providing devices 101a-101c. In one example, when the client device 103 accesses a specific service providing device 103a, the client device 103 receives a service list which includes providing devices connected to network 107 that are able to provide the specific service, as well as a service client mapping that associates the service list with the client device 103.

The network 107 can be a local area network, a wide area network or any type of network such as an intranet, an extranet (for example, to provide controlled access to external users, for example through the Internet), a private or public cloud network, the Internet, etc., or a combination thereof. In addition, the network 107 preferably uses TCP/IP (Transmission Control Protocol/Internet Protocol), but other protocols such as SNMP (Simple Network Management Protocol) and HTTP (Hypertext Transfer Protocol) can also be used. How devices can connect to and communicate over networks is well known in the art and is discussed for example, in "How Networks Work", by Frank J. Derfler, Jr. and Les Freed (Que Corporation 2000) and "How Computers Work", by Ron White, (Que Corporation 1999).

**Fig. 2** shows an exemplary constitution of a computing device that can be configured (for example, through software) to operate (at least in part) as the providing device (e.g., 101a, 101b, 101c, in Fig. 1) or a central device (e.g., 102, in Fig. 1). In Fig. 2, apparatus 200 includes a processor (or central processing unit) 202 that communicates with a number of other components, including memory or storage device 203, other input/output (e.g., keyboard, mouse, etc.) 204, display 205 and network interface 206, by way of a system bus 201. The apparatus 200 may be a special-purpose device (such as including one or more application specific integrated circuits or an appropriate network of conventional component circuits) or it may be software-configured on a conventional personal computer or computer workstation with sufficient memory, processing and communication capabilities to operate as a terminal and/or server, as should be appreciated by those skilled in the relevant art. In the management apparatus 200, the processor 202 executes program code instructions that control device operations. The processor 202, memory/storage 203, input/output 204, display 205 and network interface 206 are conventional, and therefore in order to avoid obfuscating the inventive aspects of this disclosure, such conventional aspects are not discussed in detail herein.

The apparatus 200 includes the network interface 206 for communications through a network, such as communications through the network 107. However, it should be appreciated that the subject matter of this disclosure is not limited to such configuration. For example, the apparatus 200 may communicate with user terminals through direct connections and/or through a network to which some components are not connected. As another example, the apparatus 200 does not need to be provided by a server that services terminals, but rather may communicate with the devices on a peer basis, or in another fashion.

The apparatus 200 of the present disclosure is not limited to a server or computer, but can be manifested in any of various devices that can be configured to communicate over a network and/or the Internet.

An exemplary constitution of the client device 103 of **Fig. 1** is shown schematically in **Fig. 3****.** In Fig. 3, terminal 300 includes a processor (or central processing unit) 302 that communicates with various other components, such as memory (and/or other storage device) 303, display 304, application software 305, input/output (such as keyboard, mouse, touchpad, stylus, microphone and/or speaker with voice/speech interface and/or recognition software, etc.) 306 and network interface 307, by way of an internal bus 301.

The memory 303 can provide storage for program and data, and may include a combination of assorted conventional storage devices such as buffers, registers and memories [for example, read-only memory (ROM), programmable ROM (PROM), erasable PROM (EPROM), electrically erasable PROM (EEPROM), static random access memory (SRAM), dynamic random access memory (DRAM), non-volatile random access memory (NOVRAM), etc.].

The network interface 307 provides a connection (for example, by way of an Ethernet connection or other network connection which supports any desired network protocol such as, but not limited to TCP/IP, IPX, IPX/SPX, NetBEUI, etc.) to the network to which the computer 300 is connected (e.g., network 107 of **Fig. 1**).

Additional aspects or components of the computer 300 are conventional (unless otherwise discussed herein), and in the interest of clarity and brevity are not discussed in detail herein. Such aspects and components are discussed, for example, in "How Computers Work", by Ron White (Que Corporation 1999), and "How Networks Work", by Frank J. Derfler, Jr. and Les Freed (Que Corporation 2000).

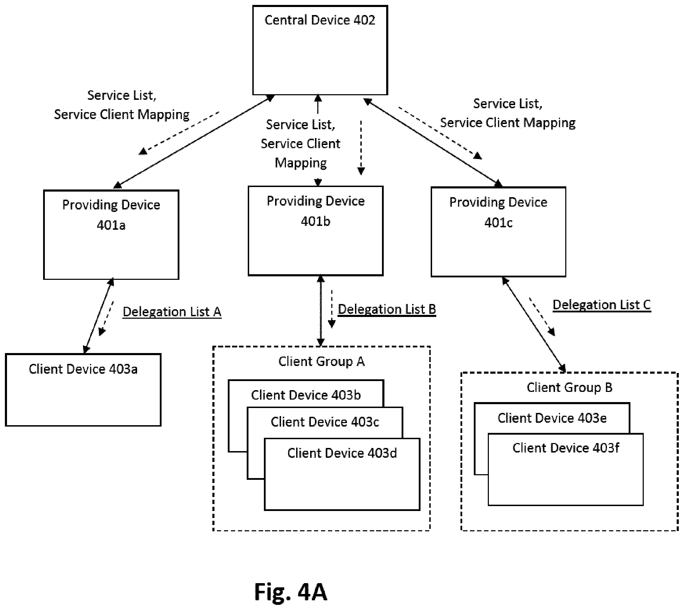

In the example shown in **Fig. 4A****,** client devices 403b-403d are associated in group A and client devices 403e and 403f are associated in group B.

The central device 402 determines one or more providing devices (e.g., 403a-403c) that are connected to the network (e.g., 107) and obtains information regarding each of the one or more providing devices. Such information may include services (e.g., document creation, mathematical simulation, electronic job application, online shopping, news providing service, etc.) that can be accessed by the client device 403a or one of the client groups A and B. Whenever, the central device 402 receives a request, via a particular providing device (e.g., 401a-401c), from a client device (e.g., 403a-403f) to access a specified service on the particular providing device, the central device creates a service list which includes all providing devices in the network that can provided the specified services. In one exemplary embodiment, after creation of the service list, the central device 402 may distribute the service list to every providing device that is connected to the network.

The client groups A and B each include one or more client devices. Such client devices in, for example, client group A may be interconnected via an internal network or LAN. Further, each client group may communicate with a default providing device. In other words, for example, in the case that the client device 403b is instructed to access a document creation service, the client device 403b may be programmed (by an administrator) to access the providing device 401b by default whenever accessing a document creation service.

Whenever, the client device 103a or any client device within the client groups A and B access a service provided particular one of the providing devices 401a-401c, the particular providing device forwards the service request to the central device 402 which proceeds to create a service client mapping to associate the client device with the service list. Next, the central device 402 sends the service list and the service client mapping to the particular providing device. In response, the particular providing device creates session information that includes a delegation list which can be a subset of the service list. The delegation list may include every providing device connected to the network that can provide the service requested by the client device. Next, the particular providing device sends the delegation list to the client device.

In an example, when the client device 401a accesses the providing device 401a to request access to a "mathematical simulation" service, the providing device 401a may forward such request to the central device 402 which in response sends the service list and service client mapping to the providing device 401a. After receiving the service list, the providing device 401a creates and sends a delegation list A to the client device 401a.

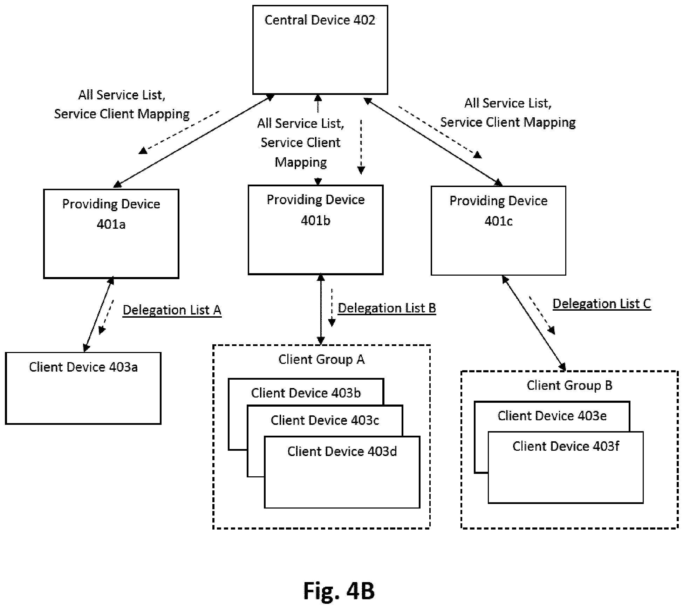

In the example shown in **Fig. 4B****,** the service list is not limited to including only providing devices in the network that can provide a specified service requested by a client device (e.g., 403a-403f). Instead, the service list may include information (including services provided) regarding every providing device connected to the network. In other words, if a providing device (e.g., 401a) provides three types of services, the service list reflects this by storing information that the providing device 401a provides three types of service. Further, it should be noted that the service list is organized by services and the providing devices in the network that can provided such services. In addition, the central device 102 may also send the service list to every providing device connected to the network. In an exemplary embodiment, the central device 102 may periodically update the service list and send the updated service list to each of the providing devices.

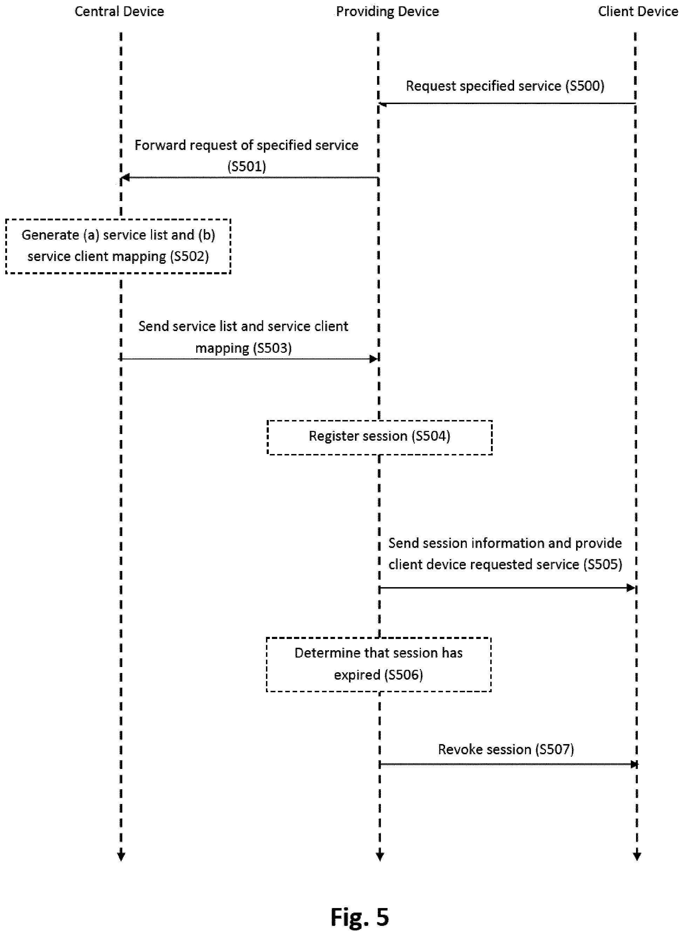

**Fig. 5** shows communication flow in, for example, the system 100A (or the system in Fig. 4A or the system in Fig. 4B), according to an exemplary embodiment.

When a user of a client device (e.g., 103) wants to access a specified service (e.g., document creation, mathematical simulation, electronic job application, online shopping, news providing service, etc.) that is provided by a providing device (e.g., 101a-101c), the client device sends a request for accessing the requested service to a providing device (S500). It should be noted that, in an exemplary embodiment, the client device may know the location of the providing device via a uniform resource locator (URL) that is inputted by the user or discovered as a link via a search engine. It should also be noted that, in another exemplary embodiment, the client device may know the location of the providing device via a corresponding existing application that may have been preinstalled on the client device.

Next, the providing device forwards to a central device (e.g., 102) the request of the specified service (S501). In response to receiving the forwarded request, the central device creates a service list and a service client mapping (S502). The service list may be a list of all providing devices in a network (e.g., 107) that can provide the requested service. It should be noted that each providing device in a network is not limited to providing only one service. Each providing device may provide one or more services. Thus, the service list does not contain only providing devices that provide exclusively that requested service. Instead, the service list includes any providing device that has the ability to provide that requested service. In an exemplary embodiment, the service list may include only providing devices that are currently available to provide the requested service. In another exemplary embodiment, the service list may include all providing devices in the network.

The service client mapping links the service list with the client device. In other words, for example, each time that a service request is forwarded to the central device, the central device generates a service list and creates a service client mapping to identify the client device that caused the service list to be generated. In an exemplary embodiment, the service client mapping may associate the service list with a client group as well.

Then, the central device sends the service list and the service client mapping to the providing device that originally forwarded the request to the central device (S503). In an exemplary embodiment, the central device may send the service list to every providing device that is on the service list. In another exemplary embodiment, the central device may send the service to every providing device connected in the network.

After receiving the service list and service client mapping, the providing device creates session information which comprises (i) a session, (ii) issuer information, (iii) delegation list and (iv) time-to-live (TTL). The session may, for example, be allotted to a user of the client device according to a predetermined time span. In other words, the session may be comprised of a communication exchange between the client device and the providing device that is limited by time. The session may also include a client identifier which links (i.e. associates) the client device with the session. The issuer information specifies that the providing device created (i.e. issued) the session thereby labeling the providing device as a session issuer. The delegation list may, one example, be the service list that was received from the central device. In another example, it may be that the service list includes all providing devices in the network. Thus, the providing device may select only providing devices that provide the requested service to be on the delegation list. The TTL limits the lifespan of the session and can be a counter (or time stamp) which when expired causes the session to be revoked.

After creating the session information, the providing device registers the session information in a local registry or cache (S504). Next, the providing device sends the session information to be stored on the client device and commences to provide the requested service (S505). After an amount of time has passed, the providing device may determine that the TTL has expired (S506). Thus, the providing device may revoke the session and inform the client device accordingly (S507).

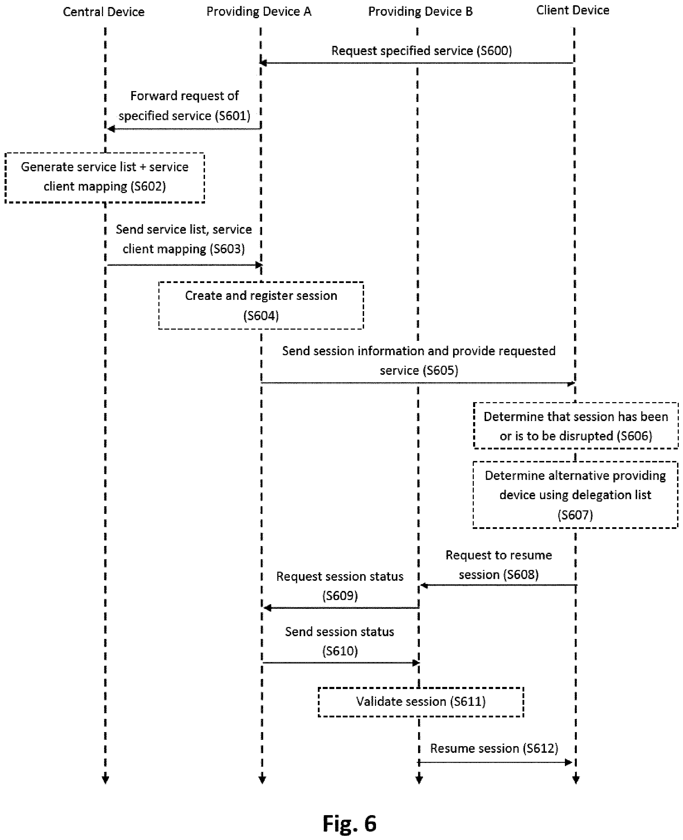

**Fig. 6** shows communication flow in, for example, the system 100A (or the system in Fig. 4A or the system in Fig. 4B), according to an exemplary embodiment.

After a client device sends a request to access a service provided by a providing device A (S600), the providing device A forwards such request to a central device (S601). In response to receiving the forwarded request, the central device creates a service list and a service client mapping (S602) and sends the service list and the service client mapping to the providing device A (S603). Using the service list and the service client mapping, the providing device A creates and stores session information (S604). Afterwards, the providing device A sends the session information to the client device and also commences to provide the requested service to the client device as well (S605).

However, while the providing device A is providing the service to the client device, several problems may occur. It may be possible that the providing device is handling too many sessions with other client devices (and/or client groups) at a time thereby causing processing within the providing device to slow down. It may also be possible that the communication between the providing device (e.g., located in Russia) and the client device (e.g., located in United States) may be slow. It may also be that the providing device may be made up of old components and therefore is slow.

As a result, the client device may decide the session should continue on another providing device instead (S606). Thus, the client device finds an alternative providing device using the delegation list that was included in the session information previously received from the providing device A (S607). In this case, the client device determines that a providing device B can take over the session from the providing device A. In one example, the method by which the client device selects the alternative providing device is based on the order that the providing devices are positioned in the delegation list. In another example, the providing device A may select the alternative providing device based on the location of the providing device with respect to the location of the client device.

Thus, the client device sends a request to the providing device B to resume the session (S608). In response, the providing device B communicates with the providing device A in order to determine whether the session has expired yet by requesting a status of the session (S609). In other words, if the providing device B discovers that, for example, the session has been revoked or the TTL has expired, the providing device B may refuse the request by the client device to resume the session. In this case, however, after receiving the session status from the providing device A (S610), the providing device B determines from the session status that the session has not yet been revoked (or the TTL has not yet expired). Consequently, the providing device B validates the session (S611) and proceeds to resume the session by providing the requested service to the client device (S612).

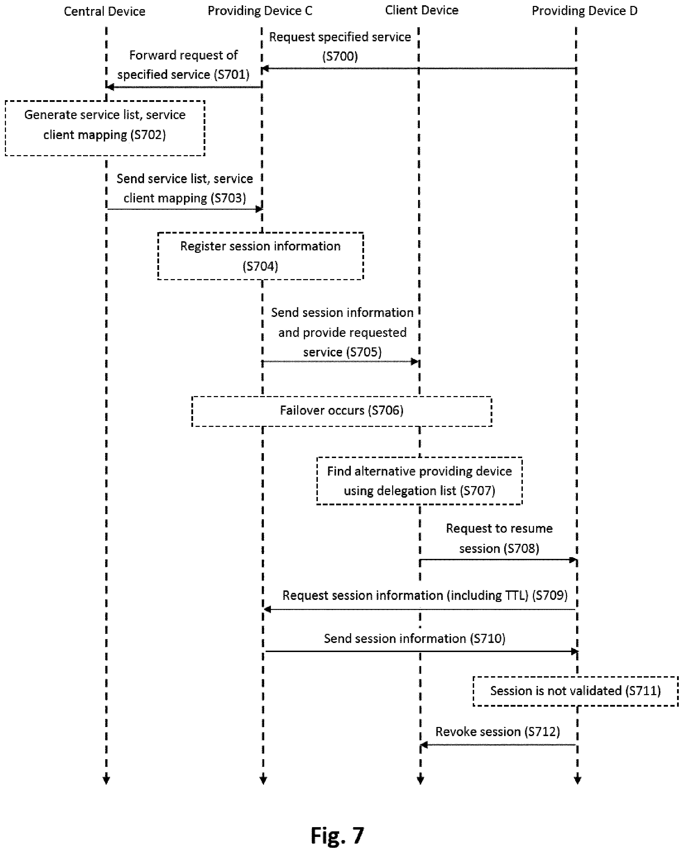

**Fig. 7** shows communication flow in, for example, the system 100A (or the system in Fig. 4A or the system in Fig. 4B), according to an exemplary embodiment.

After a client device sends a request to access a service provided by a providing device C (S700), the providing device C forwards such request to a central device (S701). In response to receiving the forwarded request, the central device creates a service list and a service client mapping (S702) and sends the service list and the service client mapping to the providing device C (S703). Using the service list and the service client mapping, the providing device C creates and stores session information (S704). Next, the providing device C sends the session information to the client device and provides the requested service (S705).

After an indeterminate amount of time, there may be a possibility that a failover occurs at either the providing device C or the client device while the client device is accessing the service provided by the providing device C (S706). A failover may be an error that takes place inside the providing device C or the client device. For example, the failover may be a software/hardware bug. In another example, the failover may mean that the providing device C or the client device is broken. It should be noted, however, that the failover occurring does not always mean the providing device C or the client device is rendered inoperable. Instead, the error that happened may only be at one section of the providing device C (e.g., service providing) or the client device (e.g., web browsing). Other sections (e.g., communications) may still be operable.

In this case, since a failover occurs, the client device recognizes that the session cannot be continued. To solve this issue, the client device finds an alternative providing device using the delegation list in the session information that was previously received from the providing device C (S707). In this case, the alternative providing device that the client device discovers is providing device D. Thus, the client device sends a request to the providing device D to resume the session (S708). In response, the providing device D communicates with the providing device C in order to determine whether the session has expired yet by requesting the TTL information corresponding to the session (S709). In other words, if the providing device D discovers that, for example, the TTL has not expired, the providing device D may validate and resume the session. In this case, however, after receiving the TTL information from the providing device D (S710), the providing device C determines from the TTL information that the session has expired. Consequently, the providing device D does not validate the session (S711) and proceeds to revoke the session (S712).

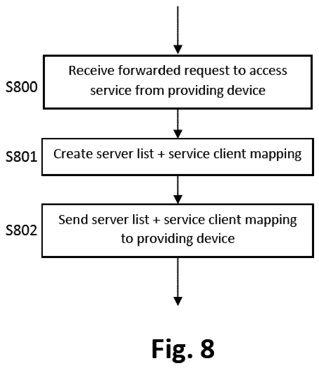

**Fig. 8** shows a method that can performed by a central device (e.g., 102 in Fig. 1) according to an exemplary embodiment.

When the central device receives from a providing device (e.g., 101a-101c) a forwarded request from a client device (e.g., 103) to access a service provided by the providing device (S800), the central device creates (i) a service list which includes plural providing devices that can provide the same service and (ii) a service client mapping to associate the service list with the client device (S801). Afterwards, the central device sends the service list and the service client mapping to the providing device (S802).

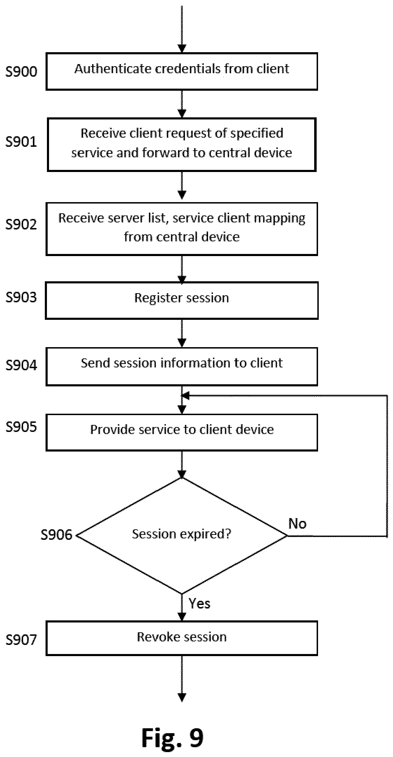

**Fig. 9** shows a method that can performed by a providing device (e.g., 101a-101c in Fig. 1) according to an exemplary embodiment.

When a user tries to access a providing device (e.g., 101a-101c) via a client device (e.g., 103), the providing device requests that the user present his or her credentials. After the providing device authenticates the credentials (S900), the providing device forwards to a central device (e.g., 102) the request by the client device to access the service provided the providing device (S901). Next, the providing device receives from the central device (i) a service list which includes plural providing devices that can provide the same service and (ii) a service client mapping to associate the service list with the client device (S902).

Then, the providing device utilizes the service list and the service client mapping to create session information (i.e. session including client identifier, issuer information, delegation list and TTL) that is to be stored on the providing device (S903). Afterwards, the providing device sends the session and the delegation list to be stored on the client device (S904) and provides the requested service to the client (S905). After an indeterminate period of time, the providing device may determine if the TTL has expired (S906). In the case that the TTL has not yet expired, the providing device continues to provide service to the client device (S906, no). On the other hand, in the case that the TTL has expired (S906, yes), the providing device revokes the session (S907).

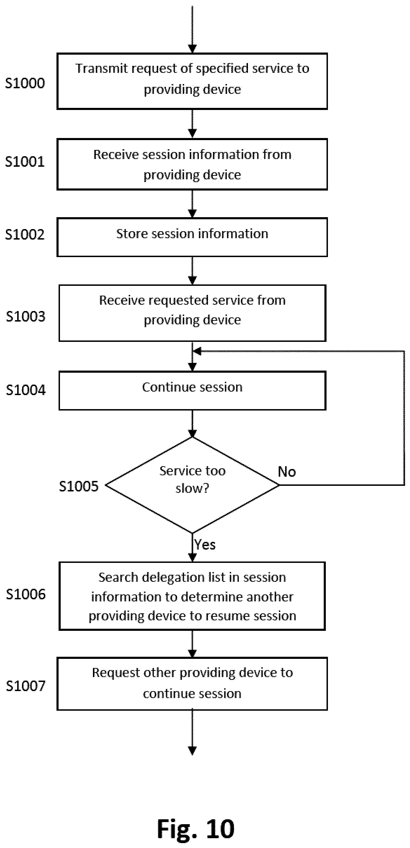

**Fig. 10** shows a method that can performed by a client device (e.g., 103 in Fig. 1) according to an exemplary embodiment.

When a client device (e.g., 103) transmits a request to a providing device to access a specified service (S 1000), the client device receives session information from the providing device (S1001) and stores the received session information (S1002). Next, the session is started for the client device when the providing device starts to provide the specified service (S1003). However, while the providing device is providing the specified service to the client device as a session (S 1004), the client device may determine that the connection between the first providing device and the client device has suddenly become slower.

In the case that the service is not too slow (S1005, no), the session is continued on the providing device (S1004). Otherwise, in the case that the service is too slow (S1005, yes), the client device may search a delegation list in the session information previously provided by the providing device to determine a second providing device that can provide a faster service (S1006). Once an alternative providing device has been found, the client device may request the other providing device to resume the session (S1007).

Thus, the user is not even aware that the providing devices have changed. He or she may be simply aware that the specified service has become slow for a brief amount of time and now the specified service is back to normal or greater speed. In other words, everything is performed automatically without any intervention by the user.

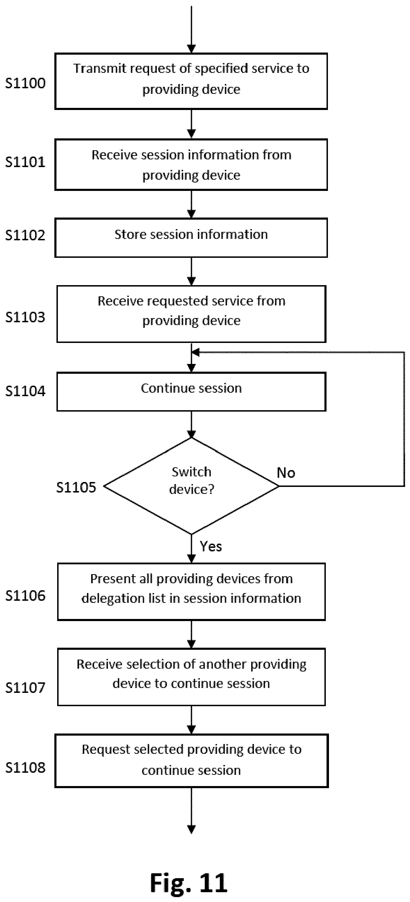

**Fig. 11** shows a method that can performed by a client device (e.g., 103 in Fig. 1) according to an exemplary embodiment.

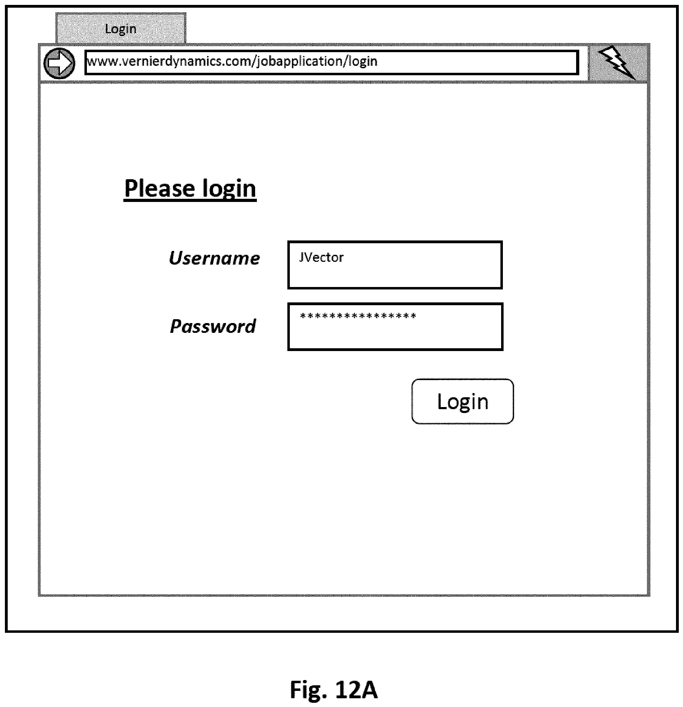

In this exemplary scenario, a user ("Jude Vector") may be a new college graduate who is applying to a position as an "Entry Level Engineer" at "Vernier Dynamics" which is a company specializes in developing aircraft for the military. "Vernier Dynamics" offers an electronic online job application system in which prospective job applicants may apply by accessing the website of "Vernier Dynamics". Since "Vernier Dynamics" receives thousands of job applications every year, "Vernier Dynamics" has a large number of servers to process the job applications. In order to keep track of job applicants, "Vernier Dynamics" may offer job applicants a chance to register a username and password to login when filling out the job application. In this case, "Jude Vector" already has a usemame and password. Thus, as shown in **Fig. 12A****,** "Jude" proceeds to login onto the system provided by "Vernier Dynamics" via his client device.

As soon as "Jude" successfully logs in to the system, the client device sends a request to a first providing device to access the job application service (S1100). In an exemplary embodiment, the location of the first providing device may, for example, correspond to the URL that "Jude" navigated to. Next, the client device receives session information from the providing device (S1101) and stores the received session and delegation list (S1102). Next, the session is started for the client device when the providing device starts to provide the job application service (S1103).

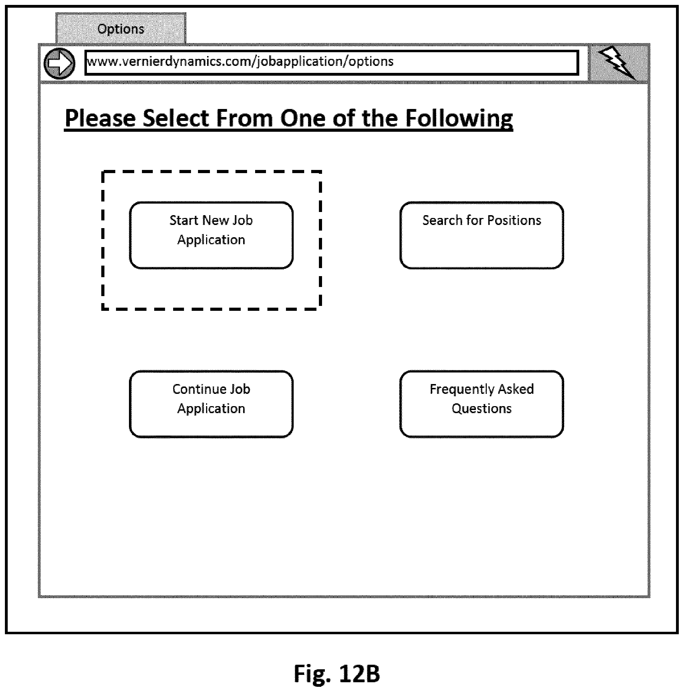

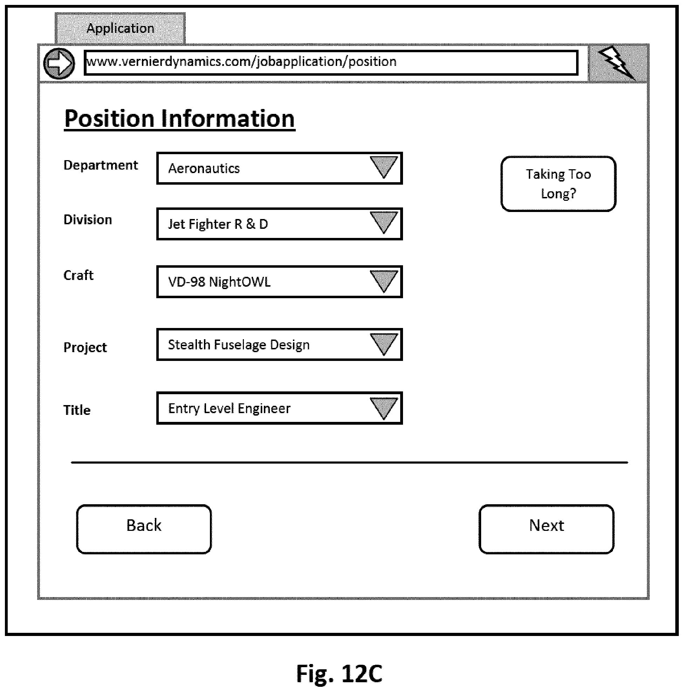

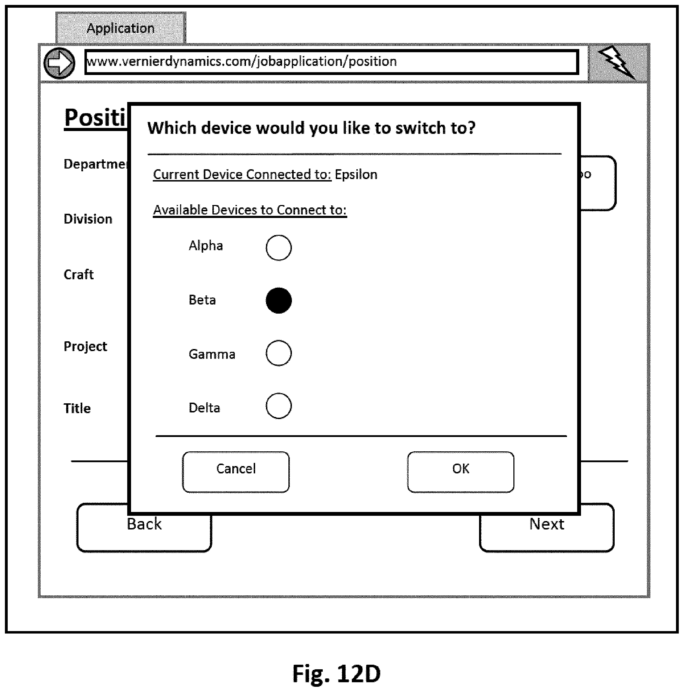

As shown in **Fig. 12B****,** "Jude" can now select the "Start New Application" option to begin his job application. In **Fig. 12C****,** "Jude" can fill out information relating to the job as in a conventional job application. However, while the providing device is providing job application service to the client device as a session (S1104), "Jude" may determine that the connection between the providing device and the client device has suddenly become slower. In the case that Jude considers that the service is too slow or taking too long, he may activate a "Taking Too Long?" button which causes a user interface screen, such as the one shown in **Fig. 12D****,** to be presented.

In this case, the providing device currently providing the job application service is "Epsilon". However, "Jude" has decided to switch to another providing device "Beta" instead. Thus, in the case that the client device receives instruction to switch providing devices (S1105, yes), the client device presents all of the providing devices in the delegation list to the user for selection (S1106). Otherwise (S1105, no), the session continues on the current providing device (e.g., "Epsilon"). Next, after the client device has received selection of the other providing device to continue the session (S1107), the client device communicates with the selected providing device to request continuation of the session (S1108).

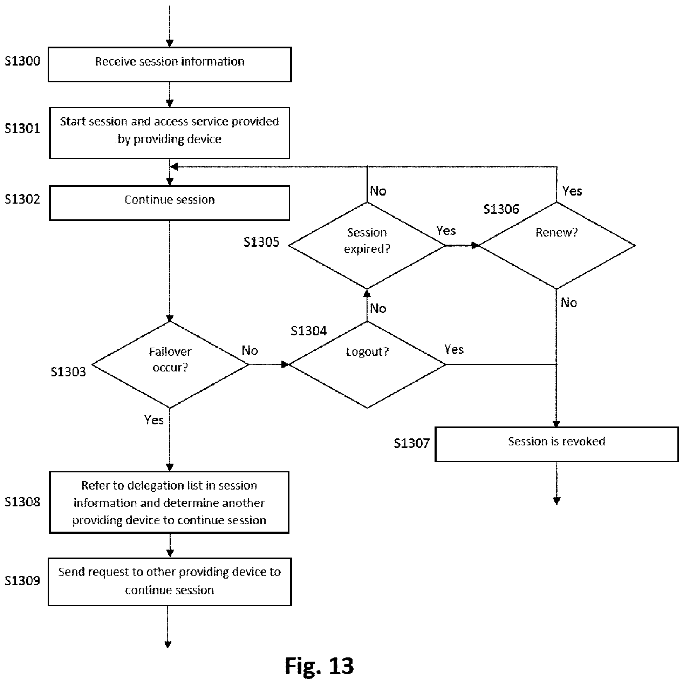

**Fig. 13** shows a method that can performed by a client device (e.g., 103 in Fig. 1) according to an exemplary embodiment.

In this case, the client device has just received session information from a providing device (S1300) and proceeds to start the session by accessing a specified service provided by the providing device (S1301). While the session is continuing (S1302), a failover may occur after an indeterminate amount of time (S1303). While a failover does not occur (S1303, no), the client device may determine whether the user has requested to log out of the session (S1304). In the case that the user has decided not to log off (S1304, no), the client device determines whether the session has expired (S1305). In the case that the session has not expired (S1305, no), the session is continued. Otherwise, in the case the session has expired (S1305, yes), the client device determines whether session should be renewed or not (S1306). In the case that the session is to be renewed (S1306, yes), the session is continued. Otherwise, in the case that the session should not be renewed (S1306, no) or the user has decided to log off (S1304, yes), the client device receives a message that the session has been revoked (S1307). On the other hand, in a case that a failover has occurred (S1303, yes), the client device may search the delegation list in the session information to determine another providing device that can resume the service (S1308). Next, after finding the other providing device, the client device requests the other providing device to resume the session (S1309).

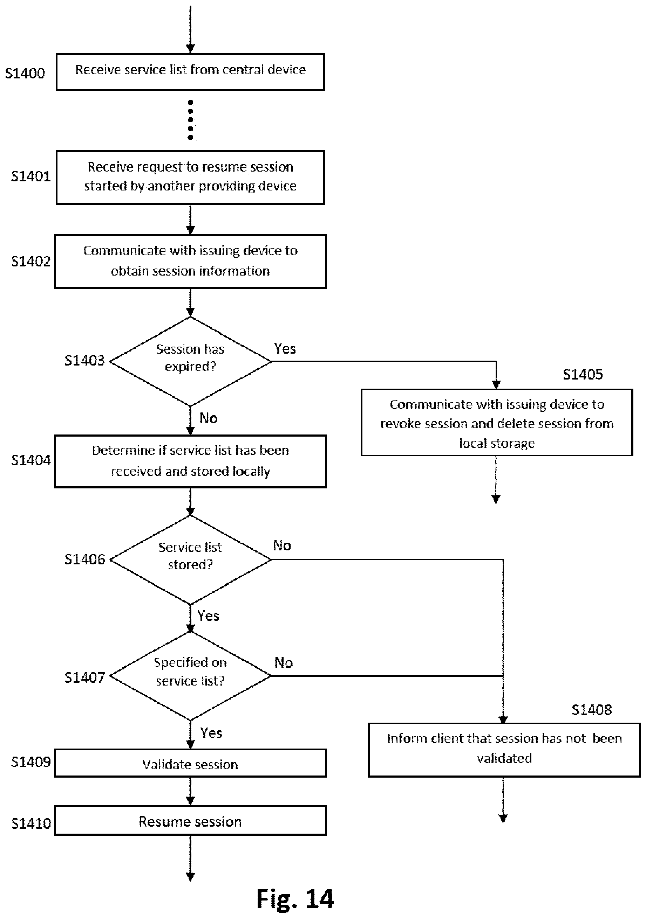

**Fig. 14** shows a method that can performed by a providing device (e.g., 101a-101c in Fig. 1) according to an exemplary embodiment.

Initially, in may be that every providing device connected to a network (e.g., network 107) may receive from a central device (e.g.,102) a service list that includes information (e.g., services provided, location, status, etc.) regarding all of the providing devices in the network (S1400). After an indeterminate amount of time, one of the providing devices may receive a request from a client device to resume a session that was not originally issued by the providing device, but by another providing device (S1401). To validate the session corresponding to the request by the client device, the providing device communicates with the issuing device (i.e. another providing device) to obtain session information (S1402). More specifically, the goal of the providing device is to obtain TTL information corresponding to the session. In the case that the TTL has expired (S1403, yes), the providing device causes the other providing device to revoke the session and delete the session from local storage of the issuing device (S1405).

Otherwise, in the case that the TTL has not yet expired (S1403, no), the providing device determines whether the service list is stored locally in the providing device (S1404). In the case that the service list is not stored locally (S1406, no), the providing device informs the client device that the session has not been validated (S1408). On the other hand, in the case that the delegation list is stored locally (S1406, yes), the providing device determines whether the providing device itself is specified, on the service list, as a providing device that is available to provide the requested service (S1407). In the case that the providing device is not specified on the service list as providing device that is able to provide the request service (S1407, no), the providing device informs the client device that the session has not been validated (S1408). On the other hand, in the case that the providing device is specified on the service list as providing device that is able to provide the request service (S1407, yes), the providing device validates the session (S1409) and proceeds to resume the session (S1410).

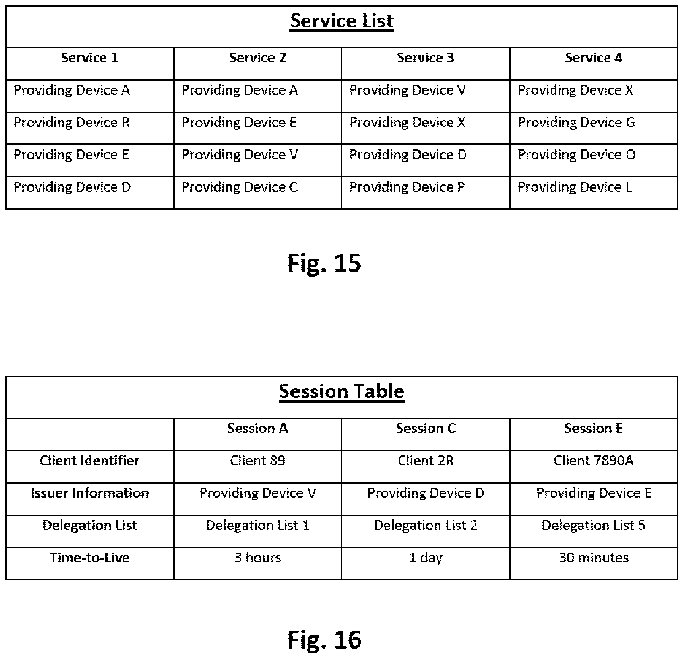

**Fig. 15** is an example of a service list. The service list may be a table of all the services (e.g., "Service 1", "Service 2", "Service 3", etc.) that are being currently provided on the network. Under each service are all the providing devices (e.g., "Providing Device E", "Providing Device A", "Providing Device C", etc.) able (or available) to provide that service.

An example of code (for a programming language) for a service list is shown below.

```
 <serverlist>
   <location>
       <server id='1' protocol='http' port='8081' host='branchserver#1.foo.com'/>
       <server id='2' protocol='http' port='8081' host='branchserver#2.foo.com'/>
       <server id='3' protocol='http' port='8081' host='branchserver#3.foo.com'/>
   </location>
   <auth_server type='failover'>
       <!-Define Server IDs in order -->
       <server>1,2,3</server>
   </auth_server>
   <scan_server type='failover'>
       <!-Define Server IDs in order -->
       <server>2,3</server>
   </scan_server>
   <print_server type='failover'>
      <!-Define Server IDs in order -->
      <server>1,3</server>
   </print_server>
   </serverlist>
```

A service client mapping links the service list with a client device. In other words, for example, each time that a service request is forwarded to a central device, the central device generates a service list and creates a service client mapping to identify the client device that caused the service list to be generated. In an exemplary embodiment, the service client mapping may associate the service list with a client group as well. An example of code (for a programming language) for a service client mapping is shown below.

```
 <clientlist>
    <client id='1' name='client#A' serverlist_id='1'/>
    </clientlist>
```

**Fig. 16** shows an example of a session table capturing session information that may be stored in a providing device. As shown, the session information comprises (i) a session including a client identifier, (ii) issuer information, (iii) delegation list and (iv) time-to-live (TTL). The session may, for example, be allotted to a user of the client device according to a predetermined time span. In other words, the session may be comprised of a communication exchange between the client device and the providing device that is limited by time. The session may also include a client identifier which links (i.e. associates) the client device with the session. The issuer information specifies that the providing device created (i.e. issued) the session thereby labeling the providing device as a session issuer. The delegation list may, one example, be the service list that was received from the central device. In another example, it may be that the service list includes all providing devices in the network. Thus, the providing device may select only providing devices that provide the requested service to be on the delegation list. The TTL limits the lifespan of the session and can be a counter (or time stamp) which when expired causes the session to be revoked.

The orders in which the steps are performed in the aforementioned methods are not limited to those shown in the examples of Figs. 5-10, 12 and 13, and may be switched as long as similar results are achieved. Also, it should be noted that the methods or processes illustrated in the examples of Figs. 5-11, 13 and 14 may be implemented using any of the systems referenced herein.

In an exemplary embodiment, there is provided a method for maintaining a content or service access session across any of plural content or service providing devices in a networked system, each providing device providing access to assigned services to client devices, and a central device tracking devices and sessions in the networked system. The method includes receiving by a requested providing device amongst the plural providing devices, from a client device, a request to access a requested service; determining by the requested providing device that the requested providing device is assigned to perform the requested service; communicating, by the requested providing device, the service request of the client device to the central device and receiving from the central device (a) a service list specifying service providing devices available to provide the requested service and (b) a service client mapping associating the client device with the service list, and the first providing device creates; and creating by the requested providing device, and registering in local cache of the requested providing device, a session including a client identifier identifying the client device, issuer information identifying the requested providing device as session issuer, a delegation list specifying the service providing devices available to provide the requested service, and a session time-to-live (TTL), and communicating the session to the client device; and receiving, by the requested providing device from an other providing device after the session has been disrupted, a request for said other providing device to resume the session, and determining whether the session has been revoked, and if the session has not been revoked and said other providing device validates the session, permitting the session to resume with the other providing device providing the requested service associated with the session to the client device.

In an exemplary embodiment, there is provided a method for maintaining a content or service access session across any of plural content or service providing devices in a networked system, each providing device providing access to assigned services to client devices, and a central device tracking devices and sessions in the networked system. The method includes transmitting by a client device to a requested providing device amongst the plural providing devices a request to access a requested service; receiving, by the client device from the requested providing device, session information for a session created by the requested providing device in response to the request to access the requested service, the session information including a client identifier identifying the client device, issuer information identifying the requested providing device as session issuer, a delegation list specifying the service providing devices available to provide the requested service, and a session time-to-live (TTL); transmitting by the client device to an other providing device, after the session has been disrupted, a request for said other providing device to resume the session; and communicating, if the session has not been revoked and said other providing device validates the session, with the other providing device to resume the session, with the other providing device providing the requested service associated with the session to the client device.

The aforementioned specific embodiments and examples are illustrative, and many variations can be introduced on these embodiments without departing from the scope of the appended claims. In addition, elements and/or features of different examples and illustrative embodiments may be combined with each other and/or substituted for each other within the scope of this disclosure and appended claims.

## Claims

1. A system (100A) configured to maintain a content or service access session across any of multiple content or service devices connected to a network, the system comprising:
a plurality of providing devices (101a-101c), each providing device providing access to assigned services to client devices;
a central device (102) that tracks devices and sessions in the system; and
a client device (103) that communicates with a first providing device amongst the plural providing devices, to request access to a requested service,
wherein the first providing device communicates the service request of the client device to the central device and receives from the central device, (a) a service list specifying service providing devices available to provide the requested service and (b) a service client mapping associating the client device with the service list, and the first providing device creates, and registers in local cache, a session including a client identifier identifying the client device, issuer information identifying the first providing device as session issuer, a delegation list specifying the service providing devices available to provide the requested service, and a session time-to-live (TTL), and communicates the session to the client device, and
wherein when the client device communicates with another providing device to request the other providing device to resume the session for the client device to obtain the requested service, the other providing device verifies the session and communicates with the session issuer to determine whether the session has been revoked, and if the session has not been revoked and the other providing device validates the session, the other providing device permits the session to resume with the other providing device providing the requested service associated with the session to the client device.

2. The system as claimed in claim 1, wherein the service list specifies for each specific service amongst plural specified services, one or more service providing devices amongst the plural providing devices delegated to provide the specific service, to the client device or to a client group with which the client device is associated.

3. The system as claimed in claim 1, wherein the central device deploys the service client mapping and the service list, to each of the plural providing devices in the system.

4. The system as claimed in claim 1, wherein the first providing device maintains sessions registered in the local cache, and when the TTL of the registered session has expired, the first providing device revokes the session.

5. The system as claimed in claim 1, wherein when the other providing device verifies the session, the other providing device checks whether the TTL of the session has expired, and if the TTL of the session has expired, the other providing device does not validate the session and revokes the session.

6. The system as claimed in claim 1,
wherein the service list specifies for each specific service amongst plural specified services, one or more service providing devices amongst the plural providing devices delegated to provide the specific service, and the central device deploys the service list to each of the plural providing devices in the system, and
wherein when the other providing device verifies the session, the other providing device checks whether the service list specifying the devices available to provide the requested service is stored locally, and if the service list specifying the devices available to provide the requested service is not stored locally, the other providing device does not validate the session.

7. The system as claimed in claim 6, wherein the other providing device checks whether the other providing device is specified on the service list as one of the devices available to provide the requested service, and if the other providing device is not specified on the service list as one of the devices available to provide the requested service, the other providing device does not validate the session.

8. The system as claimed in claim 1, wherein when the client device performs logout of the session with the other providing device, the other providing device communicates with the session issuer to revoke the session.

9. The system as claimed in claim 1, wherein the client device is configured to select any service providing device amongst the service providing devices specified on the delegation list of the session, and request the selected service providing device to perform logout of the session.

10. The system as claimed in claim 1, wherein when the selected service providing device performs logout of the session, the selected service providing device communicates with the session issuer to revoke the session, and the session issuer deletes the session from local cache of the session issuer.

11. The system as claimed in claim 1, wherein the service list specifies for each specific service amongst plural specified services, one or more service providing devices amongst the plural providing devices delegated to provide the specific service, and the first providing device communicates the delegation list associated with the client device or with a client group with which the client device is associated, to the client device.

12. The system as claimed in claim 1, wherein the session associates the delegation list with the client device or with a client group with which the client device is associated.

13. The system as claimed in claim 1, wherein the client device is configured with failover provisions to communicate with the other providing device to request to resume the session with the other providing device when session communication with the first providing device fails.

14. The system as claimed in claim 1, wherein the client device is configured with load balancing provisions to communicate with the other providing device to request to resume the session with the other providing device when the first providing device does not process the session within the TTL of the session or when an estimated rate of session processing by the first providing device suggest that the session will not be completed by the first providing device within the TTL of the session.

15. The system as claimed in claim 1, wherein the central device registers for each providing device the services assigned to the providing device, and transmits to the plural providing devices an all services list indicating the assigned services per providing device amongst the plural providing devices.

## Patentansprüche

1. Ein System (100A), eingerichtet, eine Inhalts- oder Servicesitzung zwischen irgendwelchen von mehreren an ein Netzwerk verbundenen Inhalts-oder Servicegeräten aufrechtzuerhalten, das System umfassend:
eine Vielzahl von Bereitstellungsgeräten (101a-101c), wobei jedes Bereitstellungsgerät für Client-Geräte Zugang zu zugeordneten Services bereitstellt;
ein zentrales Gerät (102), das Geräte und Sitzungen in dem System verfolgt; und
ein Client-Gerät (103), das mit einem ersten Bereitstellungsgerät der mehreren Bereitstellungsgeräte kommuniziert, um Zugang zu einem angefragten Service anzufragen,
wobei das erste Bereitstellungsgerät die Serviceanfrage des Client-Geräts an das zentrale Gerät kommuniziert und von dem zentralen Gerät (a) eine Serviceliste, die Geräte, welche einen Service bereitstellen und verfügbar sind um den angefragten Service bereitzustellen, spezifiziert und (b) eine Service-Client-Zuordnung, die das Client-Gerät mit der Serviceliste assoziiert, empfängt, und wobei das erste Bereitstellungsgerät eine Sitzung erstellt und in lokalem Cache speichert, die einen Client-Identifikator enthält, der das Client-Gerät identifiziert, Erstellerinformation, die das erste Bereitstellungsgerät als Session-Ersteller identifiziert, eine Delegationsliste, die die Geräte, welche einen Service bereitstellen und verfügbar sind um den angefragten Service bereitzustellen, spezifiziert und eine Session time-to-live (TTL), und die Session zu dem Client-Gerät kommuniziert, und
wobei, wenn das Client-Gerät mit einem anderen Bereitstellungsgerät kommuniziert, um das andere Bereitstellungsgerät anzufragen, die Session für das Client-Gerät fortzusetzen, um den angefragten Service zu erhalten, das andere Bereitstellungsgerät die Session verifiziert und mit dem Serviceersteller kommuniziert um zu bestimmen, ob die Session widerrufen wurde, und wobei, wenn die Session nicht widerrufen wurde und das andere Bereitstellungsgerät die Session validiert, das andere Bereitstellungsgerät die Fortsetzung der Session mit dem anderen Bereitstellungsgerät erlaubt, das dem Client-Gerät den angefragten Service bereitstellt, der mit der Session assoziiert ist.

2. Das System wie beansprucht in Anspruch 1, wobei die Serviceliste für jeden spezifischen Service unter mehreren spezifischen Services ein oder mehrere Service-Bereitstellungsgeräte unter den mehreren Bereitstellungsgeräten, die delegiert sind, den spezifischen Service für das Client-Gerät oder für eine Client-Gruppe bereitzustellen, mit denen das Client-Gerät assoziiert ist, spezifiziert.

3. Das System wie beansprucht in Anspruch 1, wobei das zentrale Gerät die Service-Client-Zuordnung und die Serviceliste an jedes der mehreren Bereitstellungsgeräte in dem System verteilt.

4. Das System wie beansprucht in Anspruch 1, wobei das erste Bereitstellungsgerät Sessions aufrechterhält, die im lokalen Cache registriert sind, und wobei, wenn die TTL der registrierten Session ausgelaufen ist, das erste Bereitstellungsgerät die Session widerruft.

5. Das System wie beansprucht in Anspruch 1, wobei, wenn das andere Bereitstellungsgerät die Session verifiziert, das andere Bereitstellungsgerät prüft, ob die TTL der Session ausgelaufen ist, und wobei, wenn die TTL der Session ausgelaufen ist, das andere Bereitstellungsgerät die Session nicht validiert und die Session widerruft.

6. Das System wie beansprucht in Anspruch 1,
wobei die Serviceliste für jeden spezifischen Service unter mehreren spezifischen Services ein oder mehrere Service-Bereitstellungsgeräte unter den mehreren Bereitstellungsgeräten, die delegiert sind, um den spezifischen Service bereitzustellen, spezifiziert, und wobei das zentrale Bereitstellungssystem die Serviceliste an jedes der mehreren Bereitstellungsgeräte im System verteilt, und
wobei, wenn das andere Bereitstellungsgerät die Session verifiziert, das andere Bereitstellungsgerät überprüft, ob die Serviceliste, die die Geräte spezifiziert, welche verfügbar sind, um den angefragten Service bereitzustellen, lokal gespeichert ist, und wobei, wenn die Serviceliste, die die Geräte spezifiziert, welche verfügbar sind, um den angefragten Service bereitzustellen, nicht lokal gespeichert ist, das andere Bereitstellungsgerät die Session nicht validiert.

7. Das System wie beansprucht in Anspruch 6, wobei das andere Bereitstellungsgerät überprüft, ob das andere Bereitstellungsgerät auf der Serviceliste spezifiziert ist als eines der Geräte, welche verfügbar sind, um den angefragten Service bereitzustellen, und wobei, wenn das andere Bereitstellungsgerät nicht auf der Serviceliste spezifiziert ist als eines der Geräte, welche verfügbar sind, um den angefragten Service bereitzustellen, das andere Bereitstellungsgerät die Session nicht validiert.

8. Das System wie beansprucht in Anspruch 1, wobei, wenn das Client-Gerät ein Ausloggen von der Session mit dem andere Bereitstellungsgerät durchführt, das andere Bereitstellungsgerät mit dem Session-Ersteller kommuniziert um die Session zu widerrufen.

9. Das System wie beansprucht in Anspruch 1, wobei das Client-Gerät ausgestaltet ist, irgendein Service-Bereitstellungsgerät unter den Service- Bereitstellungsgeräten auszuwählen, die auf der Delegationsliste der Session spezifiziert sind, und das ausgewählte Service-Bereitstellungsgerät anzufragen, das Ausloggen von der Session durchzuführen.

10. Das System wie beansprucht in Anspruch 1, wobei, wenn das ausgewählte Service-Bereitstellungsgerät das Ausloggen aus der Session durchführt, das ausgewählte Service-Bereitstellungsgerät mit dem Session-Ersteller kommuniziert, und der Session-Ersteller die Session aus dem lokalen Cache des Session-Erstellers löscht.

11. Das System wie beansprucht in Anspruch 1, wobei die Serviceliste für jeden spezifischen Service unter mehreren spezifischen Services ein oder mehrere Service- Bereitstellungsgeräte unter den mehreren Bereitstellungsgeräten, die delegiert sind, den spezifischen Service bereitzustellen, spezifiziert, und wobei das erste Bereitstellungsgerät die Delegationsliste, die mit dem Client-Gerät oder mit einer Client-Gruppe mit der das Client-Gerät assoziiert ist, assoziiert ist, an das Client-Gerät kommuniziert.

12. Das System wie beansprucht in Anspruch 1, wobei die Session die Delegationsliste mit dem Client-Gerät oder mit einer Client-Gruppe mit der das Client-Gerät assoziiert ist, assoziiert.

13. Das System wie beansprucht in Anspruch 1, wobei das Client-Gerät ausgestaltet ist mit Ausfallsicherungsvorschriften, um mit dem anderen Bereitstellungsgerät zu kommunizieren, um anzufragen, die Session mit dem anderen Bereitstellungsgerät fortzuführen, wenn die Session-Kommunikation mit dem ersten Bereitstellungsgerät fehlschlägt.

14. Das System wie beansprucht in Anspruch 1, wobei das Client-Gerät ausgestaltet ist Belastungsausgleichsvorschriften, um mit dem anderen Bereitstellungsgerät zu kommunizieren, um anzufragen, die Session mit dem anderen Bereitstellungsgerät fortzuführen, wenn das erste Bereitstellungsgerät die Session nicht innerhalb der TTL der Session verarbeitet oder wenn eine geschätzte Rate der Session-Verarbeitung durch das erste Bereitstellungsgerät andeutet, dass die Session von dem ersten Bereitstellungsgerät nicht innerhalb der TTL der Session fertiggestellt wird.

15. Das System wie beansprucht in Anspruch 1, wobei das zentrale Gerät für jedes Bereitstellungsgerät die Services registriert, die dem Bereitstellungsgerät zugeordnet sind, und an die mehreren Bereitstellungsgeräte eine Alle-Serviceliste übermittelt, die die zugeordneten Services pro Bereitstellungsgerät unter den mehreren Bereitstellungsgeräten indiziert.

## Revendications

1. Système (100A) configuré pour maintenir une session d'accès à un service ou contenu pour un quelconque d'une pluralité de dispositifs de service ou de contenu connectés à un réseau, le système comportant :
une pluralité de dispositifs de fourniture (101a-101c), chaque dispositif de fourniture fournissant un accès à des services attribués à des dispositifs clients ;
un dispositif central (102) qui suit des dispositifs et des sessions dans le système ; et
un dispositif client (103) qui communique avec un premier dispositif de fourniture parmi la pluralité de dispositifs de fourniture pour demander un accès à un service demandé,
où le premier dispositif de fourniture communique la demande de service du dispositif client au dispositif central et reçoit du dispositif central (a) une liste de services spécifiant des dispositifs de fourniture de service capables de fournir le service demandé et (b) une cartographie des clients de service associant le dispositif client avec la liste de services, et le premier dispositif de fourniture créé et enregistre dans un cache local une session incluant un identifiant client identifiant le dispositif client, des informations d'émetteur identifiant le premier dispositif de fourniture en tant qu'émetteur de la session, une liste de délégation spécifiant les dispositifs de fourniture de service disponibles pour fournir le service demandé, et une durée de vie (TLL) de session, et communique la session au dispositif client, et
où, quand le dispositif client communique avec un autre dispositif de fourniture pour demander à l'autre dispositif de fourniture de poursuivre la session pour que le dispositif client obtienne le service demandé, l'autre dispositif de fourniture vérifie la session et communique avec l'émetteur de session pour déterminer si la session a été révoquée, et si la session n'a pas été révoquée et l'autre dispositif de fourniture valide la session, l'autre dispositif de fourniture autorise la poursuite de la session avec l'autre dispositif de fourniture fournissant le service demandé associé à la session au dispositif client.

2. Système selon la revendication 1, dans lequel la liste de services spécifie au dispositif client ou à un groupe de clients auquel le dispositif client est associé, pour chaque service spécifique parmi une pluralité de services spécifiés, un ou plusieurs dispositifs de fourniture de service parmi la pluralité de dispositifs de fourniture délégués pour fournir le service spécifique.

3. Système selon la revendication 1, dans lequel le dispositif central distribue la cartographie de clients de service et la liste de service à chacun de la pluralité de dispositifs de fourniture dans le système.

4. Système selon la revendication 1, dans lequel le premier dispositif de fourniture maintient des sessions enregistrées dans le cache local, et quand le TLL de la session enregistrée a expiré, le premier dispositif de fourniture révoque la session.

5. Système selon la revendication 1, dans lequel, quand l'autre dispositif de fourniture vérifie la session, l'autre dispositif de fourniture vérifie si le TLL de la session a expiré, et si le TLL de la session a expiré, l'autre dispositif de fourniture ne valide pas la session et révoque la session.

6. Système selon la revendication 1,
dans lequel la liste de services spécifie, pour chaque service spécifique parmi la pluralité de services spécifiés, un ou plusieurs dispositifs de fourniture de service parmi la pluralité de dispositifs de fourniture de service délégués pour fournir le service spécifique, et le dispositif central distribue la liste de services à chacun de la pluralité de dispositifs de fourniture dans le système, et
dans lequel quand l'autre dispositif de fourniture vérifie la session, l'autre dispositif de fourniture vérifie si la liste de services spécifiant les dispositifs disponibles pour fournir le service demandé est stockée localement, et si la liste de services spécifiant les dispositifs disponibles pour fournir le service demandé n'est pas stockée localement, l'autre dispositif de fourniture ne valide pas la session.

7. Système selon la revendication 6, dans lequel l'autre dispositif de fourniture vérifie si l'autre dispositif de fourniture est spécifié sur la liste de services en tant que l'un des dispositifs disponibles pour fournir le service demandé, et si l'autre dispositif de fourniture n'est pas spécifié sur la liste de services en tant que l'un des dispositifs disponibles pour fournir le service demandé, l'autre dispositif de fourniture ne valide pas la session.

8. Système selon la revendication 1, dans lequel, quand le dispositif client effectue une déconnexion de la session avec l'autre dispositif de fourniture, l'autre dispositif de fourniture communique avec l'émetteur de session pour révoquer la session.

9. Système selon la revendication 1, dans lequel le dispositif client est configuré pour sélectionner un quelconque dispositif de fourniture de service parmi les dispositifs de fourniture de service spécifiés sur la liste de délégation de la session, et demander au dispositif de fourniture de service sélectionné d'effectuer une déconnexion de la session.

10. Système selon la revendication 1, dans lequel, quand le dispositif de fourniture de service sélectionné effectue une déconnexion de la session, le dispositif de fourniture de service sélectionné communiquer avec l'émetteur de session pour révoquer la session, et l'émetteur de session supprime la session du cache local de l'émetteur de session.

11. Système selon la revendication 1, dans lequel la liste de services spécifie, pour chaque service spécifique parmi la pluralité de services spécifiés, un ou plusieurs dispositifs de fourniture de service parmi la pluralité de dispositifs de fourniture de service délégués pour fournir le service spécifique, et le premier dispositif de fourniture communique la liste de délégation associée au dispositif client ou à un groupe de clients, auquel le dispositif client est associé, au dispositif client.

12. Système selon la revendication 1, dans lequel la session associe la liste de délégation au dispositif client ou à un groupe de clients auquel le dispositif client est associé.

13. Système selon la revendication 1, dans lequel le dispositif client est configuré avec des dispositions de basculement pour communiquer avec l'autre dispositif de fourniture pour demander la poursuite de la session avec l'autre dispositif de fourniture quand une communication de session avec le premier dispositif de fourniture échoue.

14. Système selon la revendication 1, dans lequel le dispositif client est configuré avec des dispositions d'équilibrage de charge pour communiquer avec l'autre dispositif de fourniture pour demander la poursuite de la session avec l'autre dispositif de fourniture quand le premier dispositif de fourniture ne traite pas la session pendant le TLL de la session ou quand un taux de traitement estimé de la session par le premier dispositif de fourniture indique que la session ne sera pas terminée par le premier dispositif de fourniture pendant le TLL de la session.

15. Système selon la revendication 1, dans lequel le dispositif central enregistre, pour chaque dispositif de fourniture, les services assignés au dispositif de fourniture et transmet à la pluralité de dispositifs de fourniture une liste de tous les services indiquant les services assignés par dispositif de fourniture parmi la pluralité de dispositifs de fourniture.
